Europäisches Patentamt

European Patent Office

Office européen des brevets

(19)

(11) Veröffentlichungsnummer: **0 204 849**
**B1**

(12)    .    **EUROPÄISCHE PATENTSCHRIFT**

(45) Veröffentlichungstag der Patentschrift: **16.08.90**

(51) Int. Cl.⁵: **H 04 N 5/60**

(21) Anmeldenummer: **85106767.8**

(22) Anmeldetag: **01.06.85**

(54) Schaltungsanordung zur Filterung und Demodulation eines mit mindestens einem Tonsignal frequenzmodulierten Signals.

(43) Veröffentlichungstag der Anmeldung:
**17.12.86 Patentblatt 86/51**

(45) Bekanntmachung des Hinweises auf die
Patenterteilung:
**16.08.90 Patentblatt 90/33**

(84) Benannte Vertragsstaaten:
**DE FR NL**

(56) Entgegenhaltungen:
**IEEE TRANSACTIONS ON CONSUMER
ELECTRONICS, Band CE-29, Nr. 4, November
1983, Seiten 462-468, IEEE, New York, US; C.
SCHEPERS: "A digital CTV chassis concept"**

**ELECTRONICS, Band 54, Nr. 16, 11. August 1981,
Seiten 97-103, IEEE, New York, US; T. FISCHER:
"Digital VLSI breeds next-generation TV
receivers"**

(73) Patentinhaber: **Deutsche ITT Industries GmbH
Hans-Bunte-Strasse 19 Postfach 840
D-7800 Freiburg (DE)**

(72) Erfinder: **Mehrgardt, Sönke, Dr.
Haglestrasse 26
D-7801 March-Neuershausen (DE)**

Courier Press, Leamington Spa, England.

**Beschreibung**

Aus der Zeitschrift "Electronics" vom 11.8.1981, Seiten 97 bis 103, ist ein Fernsehempfänger bekannt, der hinter dem zur Demodulation der Zwischenfrequenz vorgesehenen Schaltungsteil je einen digitalen Schaltungsteil zur digitalen Wandlung und Prozessierung des Tonsignals bzw. des FBAS-Signals (composite video) aufweist. Der Demodulator weist einen Tonsignal-Ausgang auf, der mit dem Eingang eines ersten A/D-Wandlers verbunden ist, und einen Videosignal-Ausgang, an dem lediglich das FBAS-Signal erscheint. Dieses wird an den Eingang eines zweiten schnellen A/D-Wandlers gelegt, der zur A/D-Wandlung des FBAS-Signals geeignet ist, also für Abtastfrequenzen von etwa 18 MHz. Solche schnellen A/D-Wandler sind handelsüblich.

An dem Eingang des bekannten Fernsehempfängers liegt ein Empfangssignal, welches mit mindestens einem Tonsignal, bei Stereoempfang beispielsweise mit zwei Tonsignalen, frequenzmoduliert ist. Das verstärkte Eingangssignal ist zur Gewinnung eines ersten Signals, welches nur das Tonsignal enthält, und eines zweiten Signals, welches nur das FBAS-Signal enthält, zu demodulieren und zu filtern. Zu diesem Zweck werden bei dem bekannten Fernseher noch vor der Analog-Digital-Wandlung Analogfilter verwendet, so daß schon vor der Wandlung eine Aufteilung in einen Tonkanal und in einen FBAS-Kanal erfolgt.

Die Erfindung betrifft eine solche Schaltungsanordnung zur Filterung und Demodulation eines mit mindestens einem Tonsignal frequenzmodulierten Signals, welches in einem Eingangssignal eines Fernsehempfängers enthalten ist, der einen Demodulator aufweist, an dessen Ausgang der Eingang eines zur Analog-Digital-Wandlung eines Videosignals geeigneten A/D-Wandlers liegt, gemäß dem Oberbegriff des Anspruchs 1.

Die bakennte Schaltungsanordnung hat den Nachtteil von Analogfiltern im Demodulator und eines relativ großen Aufwandes von zwei unterschiedlichen A/D-Wandlern.

Aufgabe der Erfindung ist die Angabe einer monolithisch integrierbaren Schaltungsanordnung gemäß dem Obergegriff des Anspruchs 1, welche lediglich einen einzigen A/D-Wandler benötigt.

Diese Aufgabe wird erfindungsgemäß durch die im kennzeichnenden Teil des Anspruchs 1 angegebenen Schaltungsmaßnahmen gelöst.

Die Erfindung geht also von dem Gedanken aus, das auch noch den Tonanteil enthaltende zwischenverstärkte Eingangssignal des Fernsehempfängers an den Eingang des bisher nur für die A/D-Wandlung des Videosignals verwendeten A/D-Wandlers anzulegen und das Tonsignal bzw. die Tonsignale unter Verwendung von an sich bekannten Digitalfiltern vom FBAS-Signal abzutrennen. Damit entfallen die bei der bekannten Anordnung im Demodulator enthaltenen Analogfilter.

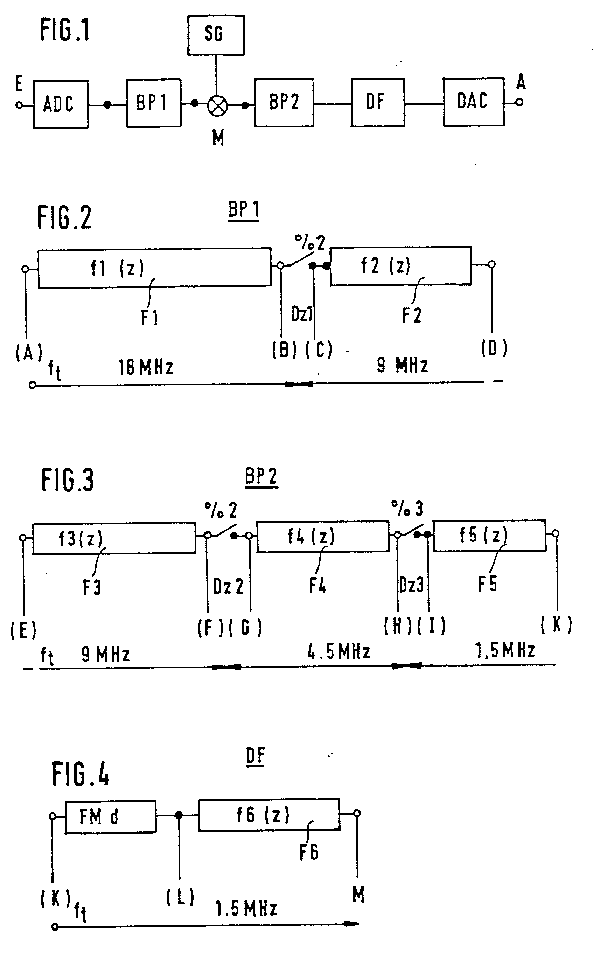

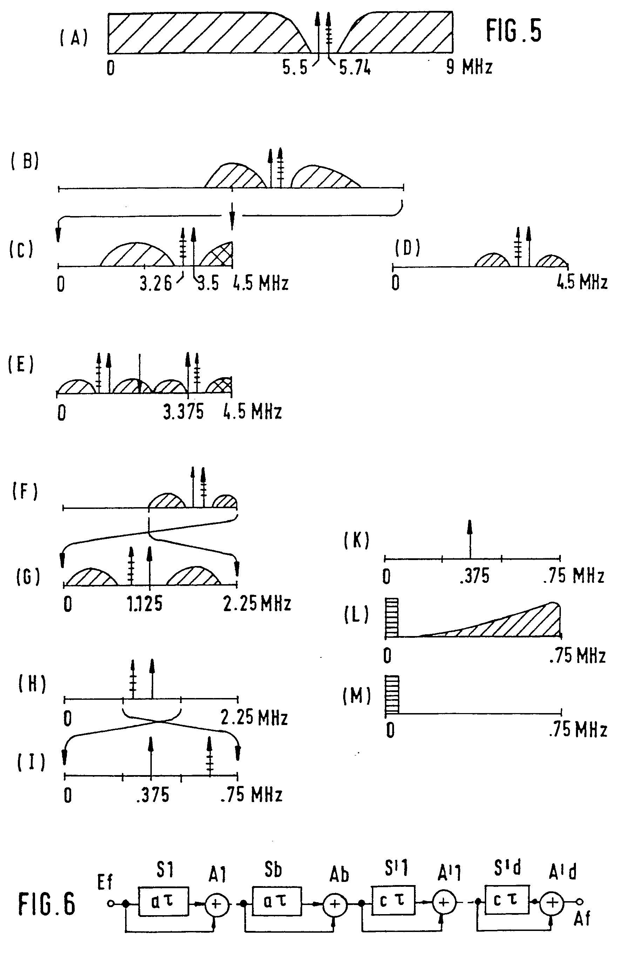

Die Erfindung und ein bevorzugtes Ausführungsbeispiel werden im folgenden anhand der Zeichnung erläutert,

deren Fig. 1 das Blockschaltbild der Schaltungsanordnung nach der Erfindung zeigt,

deren Fig. 2 bis 4 zur Erläuterung der Filtereigenschaften der Schaltungsanordnung des bevorzugten Ausführungsbeispiels nach der Erfindung dienen,

deren Fig. 5 qualitative die Betragsspektren der Signale zeigt, wie sie zwischen den Schaltungspunkten A bis M der Fig. 2 bis 4 wirksam werden, und

deren Fig. 6 zur Erläuterung der Auslegung von digitalen Filtern dienen.

Am Eingang E der Schaltungsanordnung gemäß der Fig. 1, der gleichzeitig Eingang des zur Analog/Digital-Wandlung des Videosignals geeigneten A/D-Wandlers ADC ist, liegt also das demodulierte zwischenverstärkte Eingangssignal des Fernsehempfängers, welches an dem Ausgang des Demodulators des Fernsehempfängers auftritt. Dieses Signal an dem Eingang E enthält also außer dem FBAS-Signal das mit einem Tonsignal frequenzmodulierte Signal oder im Falle eines Stereo-Tonsignals das mit zwei Tonsignalen frequenzmodulierte Audio-Signal. Als A/D-Wandler ADC kann der A/D-Wandlerteil des handelsüblichen monolithisch integrierten Wandlers UVC 3100 verwendet werden, wie er in der Zeitschrift "Elektronik" vom 4.4.1985, Seiten 98 bis 100 beschrieben ist.

Das Ausgangssignal des A/D-Wandlers ADC liegt am Eingang der digitalen Bandpaßstufe BP1, welche entsprechend dem bevorzugten Ausführungsbeispiel der Fig. 2 realisiert werden kann. Danach besteht diese digitale Bandpaßstufe PB1 aus zwei digitalen Filtern F1 und F2, zwischen denen die Dezimierstufe Dz1 eingefügt ist, der eine Frequenz mit der halben Taktfrequenz zugeführt ist. Die Dezimierung von digitalen Signalen unter Verwendung von geeigneten Dezimierstufen ist aus "Proceedings of the IEEE", Bd. 69, Nr. 3 (März 1982) Seiten 300 bis 331, bekannt.

Bei der angesprochenen Dezimierung mittels geeigneter Dezimierstufen handelt es sich jeweils um die Serienschaltung aus einer digitalen Filterschaltung und einem elektronischen Schalter. In der Regel beschränkt die digitale Filterschaltung das Frequenzspektrum des Signals auf einen Frequenzbereich, der unterhalb der neuen halben Abtastfrequenz liegt. Dieses so gefilterte Signal wird dem Signaleingang des elektronischen Schalters zugeführt, dessen Steuereingang an einem Hilfstakt liegt, der beispielsweise mittels Frequenzteilung aus dem Systemtakt abgeleitet ist. Der elektronische Schalter läßt so zum Beispiel nur jeden zweiten oder dritten ursprünglichen Abtastwert passieren. Diese Funktionsweise des elektronischen Schalters wird auch als "Unterabtastung" bezeichnet. Das Verhältnis aus neuem Abtasttakt und ursprünglichen Abtasttakt oder Digitalisierungstakt ist dabei ganzzahlig.

In den Kästen der Digitalfilter F1 und F2 sind jeweils die Übertragungsfunktionen der Filter als Funktion der komplexen Variablen z eingetragen, wobei bekanntlich der Zusammenhang

$$z=e^{i\Omega} \text{ mit } \Omega=f/f_t \text{ mit } f_t=\text{Taktfrequenz}$$

gilt. Beim bevorzugten Ausführungsbeispiel sind diese Funktionen vorgegeben durch

$$f1(z)=(1-z^{-1})^6 \cdot (1+z^{-3})^2 \cdot (1+z^{-4}) \cdot (1-z^{-5})$$

$$f2(z)=f3(z)=(1-z^{-1})^6 \cdot (1+z^{-3})^2$$

$$f4(z)=f5(z)=(1+z^{-10}) \cdot (1-z^{-12}) \cdot (1+z^{-14})/(1+z^{-2})^3$$

und

$$f6(z)=(1+z^{-1})^4 \cdot (1+z^{-2})^3 \cdot (1+z^{-4})^3$$

Daraus ergeben sich die Schaltungen der Digitalfilter. In diesem Zusammenhang wird noch auf die weiter unten beschriebene Fig. 6 zur Erläuterung verwiesen.

Da die Abtastfrequenz beträchtlich höher liegt als die höchste Tonfrequenz, beim Ausführungsbeispiel 18 MHz der PAL-Frequenz von 17,8 MHz entsprechend, tritt kein Informationsverlust auf. Es ergibt sich aber der Vorteil, daß in der auf die Bandpaßstufe BP1 folgenden Mischstufe, welche den Multiplizierer M und den digitalen Sinusgenerator SG enthält, lediglich die bessere zu beherrschende erniedrigte Taktfrequenz von 9 MHz verarbeitet werden muß, wie unterhalb der Fig. 2 angedeutet ist. Der Aufbau eines digitalen Sinusgenerators mit einem Festwertmultiplizierer, der die zur Realisierung einer Sinusfunktion erforderlichen Koeffizienten aus einem Festwertspeicher abgreift, ist allgemein bekannt und soll daher nicht näher erläutert werden.

Die Herabsetzung der Taktfrequenz von der Mischstufe hat den Vorteil, daß der digitale Sinusgenerator SG mit einer Umschaltfrequenz von 18 MHz beim Ausführungsbeispiel zwischen zwei Frequenzen umgeschaltet werden kann, so daß nicht nur ein erstes, mit einem ersten Tonsignal frequenzmoduliertes Signal bei 5,5 MHz, sondern auch noch ein zweites, mit einem zweiten Tonsignal frequenzmoduliertes Signal bei 5,74 MHz weiter verarbeitet werden kann.

Der Ausgang der Mischstufe wird mit dem Eingang einer zweiten digitalen Bandpaßstufe PB2 verbunden, welche mindestens eine Dezimierstufe enthält. Am Ausgang der zweiten digitalen Bandpaßstufe BP2 liegt bei der Schaltungsanordnung nach der Erfindung gemäß der Fig. 1 die digitale Frequenzdemodulatorstufe DF. Beim bevorzugten Ausführungsbeispiel sind gemäß der Fig. 3 zur Realisierung der zweiten digitalen Bandpaßstufe BP2 die drei digitalen Filter F3, F4 und F5 in Serie geschaltet, wobei zwischen den digitalen Filtern die Dezimierstufen Dz2 und Dz3 mit der Dezimierung um den Frequenzteilerfaktor 2 bzw. 3 eingefügt sind. Am Ausgang der zweiten digitalen Bandpaßstufe BP2 beträgt die Taktfrequenz somit 1,5 MHz, wie unterhalb der Fig. 3 angegeben ist.

Der Ausgang der zweiten digitalen Bandpaßstufe BP2 liegt gemäß der Fig. 1 am Eingang der digitalen Frequenzdemodulatorstufe DF, die beim bevorzugten Ausführungsbeispiel gemäß der Fig. 4 den digitalen Frequenzdemodulator FMd und das digitale Filter F6 enthält. Aus der DE—A—31 38 464 ist ein digitaler Frequenzdemodulator bekannt, der bei der Schaltungsanordnung nach der Erfindung Verwendung finden kann.

An dem Ausgang A, der das Tonsignal liefert, liegt der D/A-Wandler DAC, dessen Eingang mit dem Ausgang der Frequenzdemodulatorstufe DF verbunden ist. Zur D/A-Wandlung kann hier der D/A-Wandlerteil des bekannten integrierten Wandlers UVC 3100 verwendet werden, wie der in der Zeitschritt "Elektronik" vom 4.4.1985, Seiten 98 bis 100 beschrieben ist.

Die Fig. 5 veranschaulicht den an den Schaltungspunkten A bis M der Fig. 2 bis 4 auftretenden Frequenzgang des Betrages der Signalspektren für eine Schaltungsanordnung nach der Erfindung, welche zur Filterung und Demodulation eines Zweiten-Audiosignals, wie es in einem mit zwei Tonsignalen frequenzmodulierten Eingangssignal eines PAL-Fernsehempfängers enthalten ist, geeignet ist. Die Träger der beiden Tonsignale liegen bei 5,5 MHz und bei 5,74 MHz, wie die Fig. 5 (A) veranschaulicht. Die Fig. 5 (B) und 5 (C) veranschaulichen die Dezimierung des Signals zwischen den Schaltungspunkten (B) und (C) entsprechend der Fig. 2. Am Ausgang des digitalen Filters F2 wird ein Frequenzgang gemäß der Fig. 5(D) und hinter der Mischstufe am Schaltungspunkt (E) eine Verteilung gemäß der Fig. 5(E) erhalten. Der digitale Sinusgenerator SG wird mit 18 MHz zwischen zwei Frequenzen umgeschaltet und der Schaltungsteil von der Mischstufe ab gemäß dem bevorzugten Ausführungsbeispiel der Erfindung im Zeitmultiplex betrieben. Am Eingang des digitalen Filters F3 ergibt sich ein Frequenzgang gemäß der Fig. 5(E). Danach wird über das digitale Filter F3 gefiltert und gemäß den Fig. 5(F) und (G) um den Faktor 2 dezimiert. Nach einer Filterung über das digitale Filter F4, welches bei einer Taktfrequenz von 4,5 MHz beim bevorzugtem Ausführungsbeispiel betrieben wird, erfolgt eine weitere Dezimierung um den Faktor 3 gemäß den Fig. 5(H) und (I). Die Fig. 5(K) veranschaulicht die Ausfilterung des einen Tonsignalträgers mittels des digitalen Filters F5. Fig. 5(L) veranschaulicht die Wirkung des Frequenzdemodulators FMd und die Wirkung des digitalen Filters F6, an dessen Ausgang ein Frequenzgang gemäß der Fig. 5(M) auftritt.

# EP 0 204 849 B1

Aus dem Ausgangssignal des Filters F6 wird durch D/A-Wandlung das eine Tonsignal gewonnen. Gleiches gilt für das andere Tonsignal.

Die in den Kästen der Fig. 2 bis 4 angegebenen Übertragungsfunktionen der digitalen Filter können mittels Schieberegistern und Addierern in an sich bekannter Weise realisiert werden, wie die Fig. 6 beispielsweise für die Übertragungsfunktion

$$f(z)=(1+z^{-a})^b \cdot (1+z^{-c})^d$$

veranschaulicht. Die Filteranordnung der Fig. 5 besteht also aus einer Serienschaltung von Schieberegistern S1.. S'd, an deren Ausgang jeweils ein Addierer A1...A'd liegt, dessen zweiter Eingang mit dem Eingang des betroffenen Schieberegisters verbunden ist. Nach den Exponenten a bzw. c sind demnach die Verzögerungszeiten der einzelnen Schieberegister und nach den Exponenten b bzw. d die Anzahl der hintereinander geschalteten Schieberegister/Addierer-Paare der beim Ausführungsbeispiel aus zwei Teilanordnungen bestehenden Filteranordnung zu verstehen.

Ein Vorteil der Schaltungsanordnung nach der Erfindung neben der monolithischen Integrierbarkeit besteht darin, daß die Übertragungsfunktionen im wesentlichen nur von der Taktfrequenz $f_t$ abhängig ist, die sehr genau eingehalten werden kann und bei Verwendung eines Schwingquarzes auch kaum temperaturabhängig ist. Im übrigen wird ein A/D-Wandler, nämlich der zur Wandlung des Audiosignals, entbehrlich.

Ein weiterer wesentlicher Vorteil der Schaltungsanordnung nach der Erfindung besteht darin, daß die Signalverarbeitung zumindest bis zur digitalen Frequenzdemodulatorstufe mit nur wenigen Bits ohne wesentlichen Einbuße an Tonqualität erfolgen kann, da das Tonsignal in einem frequenzmodulierten Signal enthalten ist und nicht in einem amplitudenmodulierten Signal.

So sind bereits 2 bis 4 Bit vor dem Bandpaß BP1 und 4 bis 8 Bit zwischen dem Multiplizierer M und dem Bandpaß BP2 ausreichend, um eine befriedigende Tonqualität zu erzielen.

## Patentansprüche

1. Schaltungsanordnung zur Filterung und Demodulation eines mit mindestens einem Tonsignal frequenzmodulierten Signals, welches in einem Eingangssignal eines Fernsehempfängers enthalten ist, der einen Demodulator aufweist, an dessen Ausgang der Eingang eines zur Analog/Digital-Wandlung eines Videosignals geeigneten A/D-Wandlers liegt, dadurch gekennzeichnet,

daß der Demodulator einen Ausgang aufweist, an dem das demodulierte zwischenverstärkte Eingangssignal des Fernsehempfängers abgreifbar ist, welches an dem Eingang des A/D-Wandlers (ADC) liegt,

daß der Ausgang des A/D-Wandlers (ADC) über eine erste digitale Bandpaßstufe (BP1) mit dem Eingang einer Mischstufe verbunden ist, welche einen Multiplizierer (M) und einen digitalen Sinusgenerator (SG) enthält,

daß der Ausgang der Mischstufe über eine zweite digitale Bandpaßstufe (BP2), welche mindestens eine Dezimierstufe zur Reduktion der Abtastrate um ein ganzzahliges Verhältnis enthält, mit dem Eingang einer Frequenzdemodulatorstufe (DF) verbunden ist und

daß der Ausgang der Frequenzdemodulatorstufe (DF) am Eingang eines D/A-Wandlers (DAC) liegt, der das Tonsignal liefert.

2. Schaltungsanordnung nach Anspruch 1, dadurch gekennzeichnet, daß mindestens eine der digitalen Bandpaßstufen (BP1; BP2) eine Dezimierstufe (Dz1; Dz2; Dz3) zur Reduktion der Abtastrate um ein ganzzahliges Verhältnis enthält.

6. Schaltungsanordnung nach Anspruch 2, dadurch gekennzeichnet, daß der digitale Sinusgenerator (SG) zwischen mindestens zwei Frequenzen umschaltbar ist.

## Revendications

1. Montage pour filtrer et démoduler un signal, qui est modulé en fréquence par au moins un signal son et est contenu dans un signal d'entrée d'un récepteur de télévision, qui possède un démodulateur, à la sortie duquel est raccordée l'entrée d'un convertisseur analogique/numérique convenant pour réaliser la conversion analogique/numérique d'un signal vidéo, caractérisé par le fait

que le démodulateur possède une sortie, sur laquelle peut être prélevé le signal d'entrée démodulé du récepteur de télévision, amplifié entre-temps et appliqué à l'entrée du convertisseur analogique/numérique (ADC),

que la sortie du convertisseur analogique/numérique (ADC) est reliée par l'intermédiaire d'un premier étage formant filtre passe-bande numérique (BP1) à l'entrée d'un étage mélangeur, qui contient un multiplicateur (M) et un générateur numérique de fonction sinusoïdale (SG),

que la sortie de l'étage mélangeur est reliée par l'intermédiaire d'un second étage formant filtre passe-bande numérique (BP2), qui contient au moins un étage diviseur servant à réduire la fréquence de balayage dans un rapport entier, à l'entrée d'un étage formant démodulateur de fréquence (DF), et

4

que la sortie de l'étage formant démodulateur de fréquence (DF) est reliée à l'entrée d'un convertisseur numérique/analogique (DAC), qui fournit le signal son.

2. Montage suivant la revendication 1, caractérisé par le fait qu'au moins l'un des étages formant filtres passe-bande numériques (BP1; BP2) contient un étage diviseur (Dz1; Dz2; Dz3) servant à réduire la fréquence de balayage dans un rapport entier.

3. Montage suivant la revendication 2, caractérisé par le fait que le générateur numérique de fonction sinusoïdale (SG) peut être commuté entre au moins deux fréquences.

**Claims**

1. Circuit arrangement for filtering and demodulating a signal which is frequency-modulated with at least one audio signal and contained in an input signal of a television receiver having a demodulator whose output is coupled to the input of an A/D converter suited for converting a video signal from analog to digital form, characterized in

that the demodulator has an output providing the demodulated amplified input signal of the television receiver, which signal is applied to the input of the A/D converter (ADC),

that the output of the A/D converter (ADC) is connected via a first digital band-pass filter stage (BP1) to the input of a mixer stage containing a multiplier (M) and a digital sine-wave generator (SG);

that the output of the mixer stage is connected via a second digital band-pass filter stage (BP2) containing at least one decimation stage for the reduction of the sampling rate by an integer frequency division factor to the input of a frequency demodulator stage (DF), and

that the output of the frequency demodulator stage (DF) is coupled to the input of a D/A converter (DAC) delivering the audio signal.

2. A circuit arrangement as claimed in Claim 1, characterized in that at least one of the digital band-pass filter stages (BP1; BP2) contains a decimation stage (Dz1, Dz2, Dz3) for the reduction of the sampling rate by an integer frequency division factor.

3. A circuit arrangement as claimed in Claim 2, characterized in that the digital sine-wave generator (SG) is switchable between at least two frequencies.

**FIG.1**

E ○— ADC —•— BP1 —•—⊗—•— BP2 — DF — DAC —○ A

SG (above ⊗)

M (below ⊗)

**FIG.2**  BP 1

(A) ○— f1 (z) [F1] —○ ⟋ %2 •— f2 (z) [F2] —○ (D)

Dz1

(A) f_t  18 MHz  (B)(C)  9 MHz  (D)

**FIG.3**  BP2

(E) ○— f3(z) [F3] —○ ⟋ %2 •— f4 (z) [F4] —○ ⟋ %3 •— f5 (z) [F5] —○ (K)

Dz 2   Dz3

(E) f_t  9 MHz  (F)(G)  4.5 MHz  (H)(I)  1.5 MHz  (K)

**FIG.4**  DF

(K) ○— FM d —•— f6 (z) [F6] —○ M

(K) f_t  (L)  1.5 MHz  M

1

EP 0 204 849 B1

FIG.5

FIG.6

2